# EUROPEAN PATENT SPECIFICATION

(11) **EP 3 332 127 B1**
(45) Date of publication and mention of the grant of the patent: **29.01.2020**
(21) Application number: 16744376.1
(22) Date of filing: 26.07.2016
(51) Int. Cl.: F04D 13/08, F04D 15/02, F04D 29/42, F16G 11/10

(54) **SUBMERSIBLE PUMP WITH FLOAT SWITCH AND FLOAT SWITCH CABLE CLIP RESTRICTOR**
TAUCHPUMPE MIT SCHWIMMSCHALTER UND SCHWIMMSCHALTERKABELRESTRIKTOR
POMPE SUBMERSIBLE COMPRENANT UN INTERRUPTEUR À FLOTTEUR ET UN RESTRICTEUR DE CÂBLE D'INTERRUPTEUR À FLOTTEUR

(30) Priority: 03.08.2015 US 201562200141 P
(43) Date of publication of application: 13.06.2018
(73) Proprietor: Husqvarna AB, 561 82 Huskvarna (SE)
(72) Inventor: GUNGL, Johannes, 89079 Ulm (DE); RIETH, Sebastian, 74080 Heilbronn (DE)
(74) Representative: Finkele, Rolf
(86) International application number: PCT/EP2016/067805
(87) International publication number: WO 2017/021221

(56) References cited:
- EP-A1- 1 454 066
- EP-A2- 2 313 658
- DE-A1-102005 031 420
- US-A- 4 626 175
- US-B1- 8 529 228

## Description

### TECHNICAL FIELD

Example embodiments generally relate to submersible pumps and, in particular, relate to a submersible pump with releasable base.

### BACKGROUND

Pumps are typically used to move fluid from one location to another or circulate a fluid in a system. Some pumps may be used to drain a volume of fluid or maintain a fluid level at or below a predetermined volume. In some cases, pumps may be external to the fluid volume and a hose or pipe may connect the pump to the volume of fluid. In other cases, the pump may have direct suction to ingest the fluid for discharge to a hose. In an instance in which the pump has a direct suction, the pump may be submerged in the volume of fluid, e.g. a submersible pump.

A submersible pump may suffer from debris clogging or fouling of the suction and/or impeller/impeller cavity strainer plate, such as incorporated into a base, held in place by a plurality of screws. In order to access and clean the suction, impeller, and/or impeller cavity, the screws must be removed. Removal of the screws may be an irksome and time consuming task requiring one or more tools, such as screwdrivers, Allen wrenches, or the like. The process of removing the screws may be further frustrating if the submersible pump has been in use and is wet and/or oily. Some users may not understand that the suction and impeller cavity may and be disassembled for cleaning, due to the numerous screws holding the base in position, or may believe that such connecting/retention means are indicative of a warranty boundary, which if opened would void the warranty of the submersible pump.

Some submersible pumps may include a float switch for controlling the supply power applied to a pump motor. The float switch may be tethered to the submersible pump by a dedicated tether or a control cable. In some instances, the length of play in the tether may affect the operation of the float switch, such as restricting the movement of the float switch. Restriction of the movement of the float switch may prevent the float switch from operating properly, such as continuously running or not running.

In some cases, submersible pumps may be used with multiple discharge hose sizes or configurations. Resultantly, multiple converters or connection attachments may be necessary. In typical submersible pumps, the connectors or converters may be operably coupled to a pump discharge when in us, and stored separately when not in use. The number of connectors and separate storage may be cumbersome and frustrating to users when a change of discharge hose is desired.

Typical submersible pumps may include a rope or cable to raise and lower the submersible pump into the volume of fluid. Typically the rope is feed through an aperture on the submersible pump, such as a mounting ring/aperture or through the handle, and a knot in the rope prevents the rope from being pulled through the aperture. However, in use, the rope may become wet or slick due to contact with the fluid. The knot may fail or be difficult to unknot due to the fluid contact.
For example, U.S. patent 4,626,175 discloses a fluid pump for controlling level of a fluid medium. The fluid pump includes a housing, and drive means for driving the fluid pump in the housing. The fluid pump further includes a clamp means associated with the housing. The clamp means removably holds a cable means in a predetermined stationary position. The clamp means provides manual release of the cable means from the clamp means and subsequent manual reinsertion of the cable means in the clamp means at a different position along the length of the cable means whereby the distance of the cable means extending between the clamp means and the float element is changed.
European patent reference 2, 313, 654 discloses a clamping device for electric cables for submersible pumps. The clamping device includes clamping means of the electric cables suitable to be constrained to the body of a pump through coupling means. The clamping means includes a connector suitable to be constrained to the coupling means and a tear-resistant sleeve shaped clamping member, suitable to house a portion of at least one electric cable and to be brought by the connector laterally to a respective final length, so that the tear-resistant sleeve is suitable to exercise with a respective edge of the final length a compression onto the electric cable such as to prevent the sliding through the sleeve as reaction of the connector to a traction acting on the electric cable.
Another example is provided by U.S. patent reference 8, 529, 228 discloses a sump having a submersible sump pump. An electric switch inside a float switch closes when the float switch is lifted to a horizontal orientation. The submersible sump pump further includes a sump pump cover having a neck portion sized to conform to the vertical discharge pipe, and a connection attaching the neck portion to the vertical discharge pipe. A sump pump cover prevents an entanglement of the float switch as it rises and falls with a varying water level in the pump. Also, European patent reference 1, 454, 066 discloses a submersible pump assembly with a float switch which can be suspended by a cable in a cable holder on the pump housing. The submersible pump is characterized in that the cable is locatable in a multiple different heights. Also, a switch holder is provided for holding the float switch in a fixed position for continuous operation of the pump.
In yet another example, German patent reference 102005031420 discloses a rotary pump with an electric drive. A pump housing has a centrally located inlet opening and at least one outlet aperture. An impeller is located between the pump housing and the outlet openings for liquid transport. A device adjusts distance of the impeller from a mounting surface of the pump. The impeller has at least two blade rings which are spaced apart from the base of the pump. The inner diameter of the blade rings define a concentrically arranged channel through which the liquid to be pumped enters the blade rings.

### BRIEF SUMMARY OF SOME EXAMPLES

Accordingly, the present invention provides a submersible pump with the feature of claim 1, namely a submersible pump including a pump housing, a motor disposed within the pump housing configured to power an impeller, a float switch configured to control supply power to the motor, a float switch cable clip disposed at a fixed position relative to the pump housing, a float switch cable comprising a clip restrictor disposed in a non-operation region of the float switch cable. The clip restrictor prevents the float switch cable from being clipped in the non-operation region.

### BRIEF DESCRIPTION OF THE SEVERAL VIEWS OF THE DRAWING(S)

Having thus described the submersible pump in general terms, reference will now be made to the accompanying drawings, which are not necessarily drawn to scale, and wherein:
Figure 1 illustrates an example submersible pump according to an example embodiment.
Figure 2 illustrates a cross-sectional view of submersible pump according to an example embodiment.
Figure 3A illustrates an example excenter release connector according to an example embodiment.
Figure 3B illustrates an example cross-sectional view of a release connector operation according to an example embodiment.
Figure 4A illustrates an example quarter turn release connector according to an example embodiment.
Figure 4B illustrates an example quarter turn release connector capture according to an example embodiment.
Figure 4C illustrates example release connector operating heads according to some example embodiments.
Figure 4D illustrates and example ball lock release connector according to an example embodiment.
Figure 5 illustrates an example float switch assembly according to an example embodiment.
Figures 6A-C illustrate example submersible pumps with a discharge hose connector storage according to an example embodiment.
Figure 7 illustrates an example cable end clip in an open position according to an example embodiment.
Figure 8 illustrates an example cable end clip in a closed position according to an example embodiment.
Figure 9 illustrates an example cable end clip in use with a submersible pump according to an example embodiment.

### DETAILED DESCRIPTION

In some examples, a submersible pump is provided with a base portion which is releasably connected to the pump housing by a plurality of release connectors. The release connectors may be easily operated to allow simplified access to the impeller cavity to clean or repair the impeller, impeller cavity, and/or suction. Some example release connectors include excenter connectors, quarter turn fasteners, ball lock pins, or the like. The release connectors may be configured to be operated with simple tools, such as a flathead screwdriver, coin, knife blade, or the like. In some example embodiments, operation of the release connectors may be accomplished by hand, such as by using the thumb and forefinger to turn an operating head. The use of release connectors may encourage users to clean and/or repair the impeller, impeller cavity, suction, or the like and/or may simplify cleaning or repair of the impeller, impeller cavity, suction, or the like.

According to the invention, the submersible pump includes a float switch assembly including a clip restrictor. The float switch assembly has a cable which is clipped into a cable clip allowing the float switch to operate with the loose portion of the cable. The clip restrictor prevents the cable from being clipped in a portion of the cable in which the operation of the float switch may be degraded, e.g. a non-operation region. The cable is clipped in an operation region in which the cable has sufficient length to allow the float switch to operate properly.

In some example embodiments, the submersible pump may include a pump discharge configured to different discharge hose connectors. The submersible pump may include an onboard storage for the discharge hose connectors which are not currently in use. The submersible pump discharge may include a discharge connector fastener, such as a nut or slot and tab, to connect selected discharge hose connectors to the pump discharge. The non-selected discharge hose connectors may be stored on the submersible pump in a discharge hose connector storage. The discharge hose connector storage may be a T slot in which the base of the non-selected discharge hose connectors may be received. In other example embodiments, the discharge hose connector storage may be a molded receiver cavity which holds the connectors with friction of tension; or a bandolier. Storing the connectors on the pump and having an easy to operate, or tool-less connector fastener, may allow for more rapid, and generally easier, connector changes by the user.

In an example embodiment, the submersible pump may be raised or lowered into a fluid volume using a cable operably coupled to a submersible pump. The submersible pump may include a mounting point for the cable such as a mounting ring or aperture. The cable may be operably coupled to the submersible pump by passing the cable through the mount and attaching a cable end clip which is larger than the diameter of the mount aperture preventing the cable from being withdrawn. The cable end clip may have an upper and lower housing with a series of ribs of differing diameters disposed on the inner surface. The upper and lower housing may shut on a cable and the ribs may engage the cable preventing release. The upper and lower housing may have a hinge at one end, and shut in a clam shell like manner. The cable end clip may also include a clip fastener to maintain the cable end clip in the shut position. The cable end clip may be easier to clip and unclip than tying or untying a knot. Additionally, the cable end clip may be less susceptible to release due to slippage caused by the fluid and may also be function with several different diameter cables.

### Example Submersible Pump

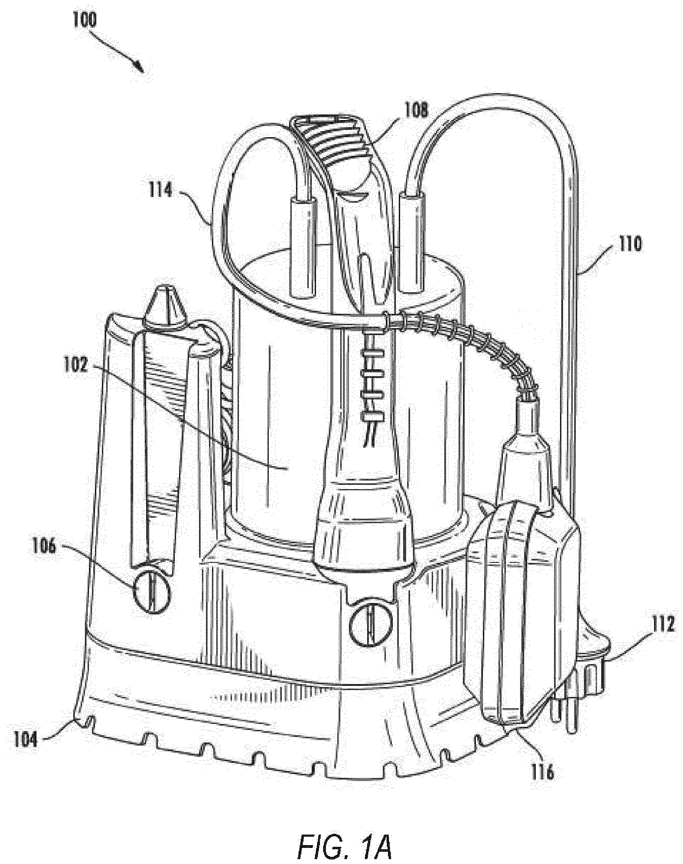

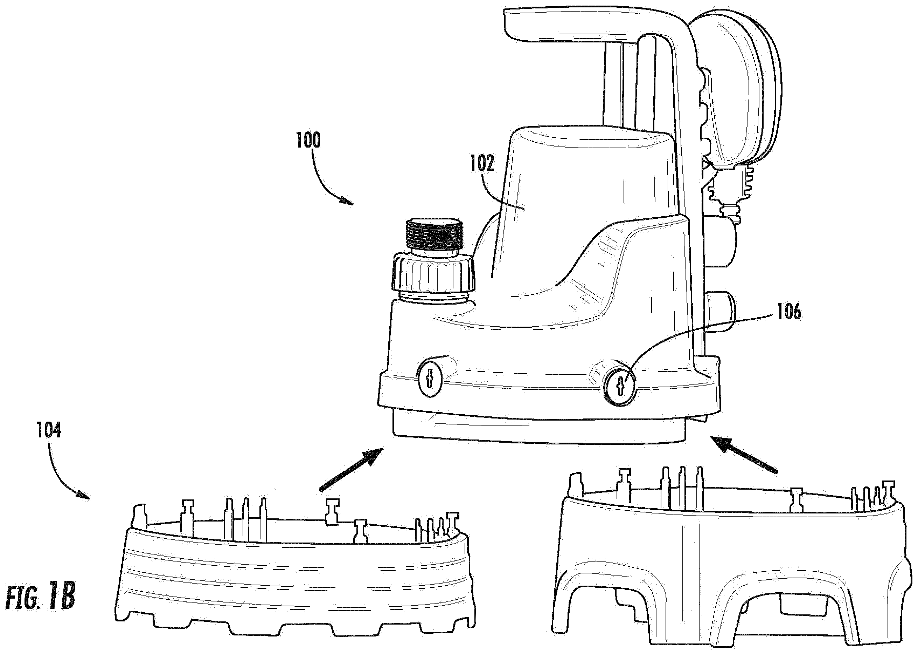

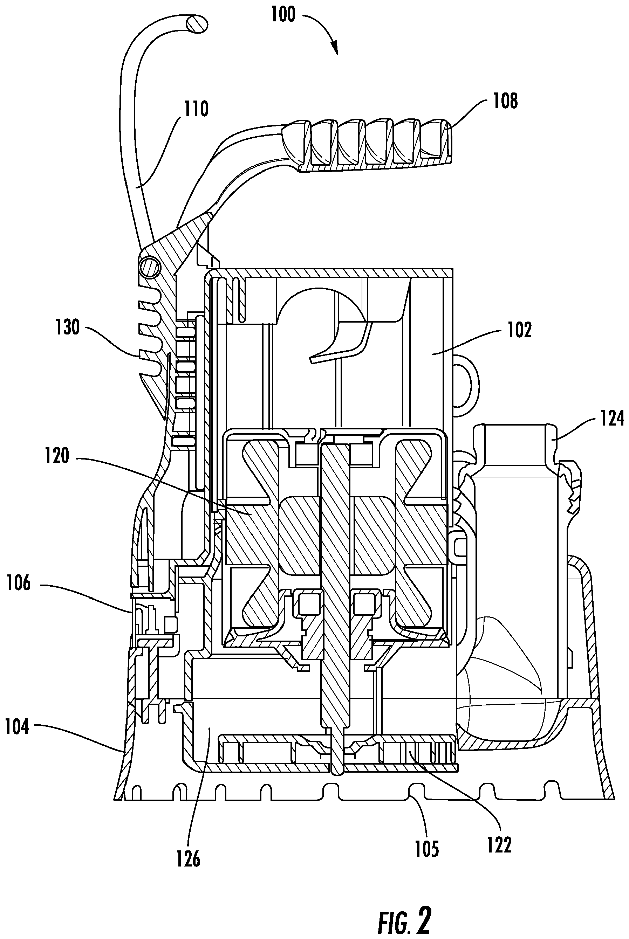

An example embodiment will now be described in reference to Figure 1, which illustrates an example submersible pump. The submersible pump 100 may include a pump housing 102 a pump base 104, a float switch 116, and a power cable 110. The pump housing 102 may contain the motor, impeller, discharge channel, or the like, as discussed below in Figure 2. The pump housing 102 may be water proof or contain water proof areas to prevent the fluid being pumped into or entering portions containing electrical components. The submersible pump 100 may receive electrical power for at least the operation of the motor, and control circuitry if provided, through the power cable 110. The power cable 110 may be connected to an electric power source, such as a wall outlet, by the electrical plug 112.

The submersible pump 100 may include a handle 108 configured to support the weight of the submersible pump. The handle 108 may be utilized, in some instances to raise or lower the submersible pump 100, into or out of a volume to pump fluid, or to transport the submersible pump. The handle 108 may include a float switch cable clip 130, as shown in Figure 2, to secure a portion of the float switch cable 114.

The float switch 116 may control the supply of electrical power to the motor. In an example embodiment, the float switch 116 may be configured to stop the supply of electrical power to the motor in an instance in which the float switch 116 is pointed downward, indicating the fluid volume is below the float switch 116. The float switch 116 may initiate the supply of electrical power to the motor in an instance in which the float switch 116 is pointed horizontally and/or upward, indicating that the volume of fluid is at or above the level of the float switch 116.

The pump base 104 may provide support for the submersible pump 100. The pump base 104 may also include or comprise a suction aperture or apertures, such as a strainer plate to allow the fluid to enter an impeller cavity of the submersible pump 100, as shown below in Figure 2. The pump base 104 may be releasably connected to the pump housing 102 by a plurality of release connectors 106.

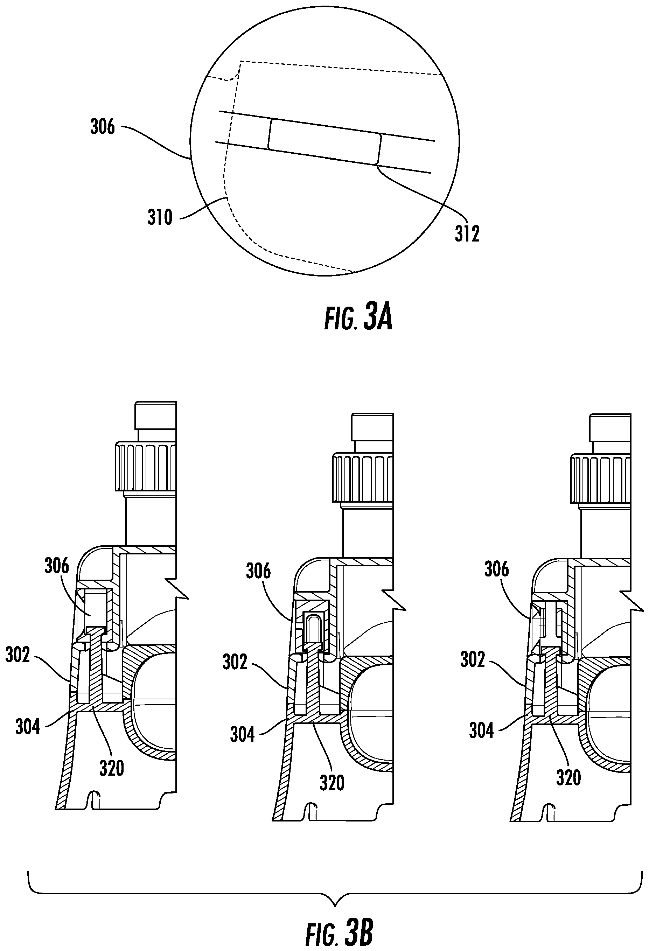

The construction and operation of the release connectors is discussed below in Figure 3A and 3B.

Figure 2 illustrates a cross-sectional view of the submersible pump 100 according to an example embodiment. As shown in Figure 2, the submersible pump 100 may include the pump housing 102, pump base 104, motor 120, and an impeller 122.

The motor 120 may be housed within the pump housing 102. A shaft may extend form the motor 120 to the impeller 122. The shaft may transfer the rotational force of the motor 120 to the impeller 122.

The pump housing 102 may be releasably connected to the pump base 104. An impeller cavity 126 may be disposed between the pump housing 102 and the pump base 104.

In operation, the motor 120 may be energized and transfer rotational motion from the shaft to the impeller 122. The rotation of the impeller may cause a low pressure area to form below the impeller. A fluid may be drawn into the impeller cavity 126, through the pump base 104 suction apertures 105. The rotational force of the impeller 122 may cause a higher pressure area at the periphery of the impeller, forcing the fluid through a discharge channel toward the pump discharge 124.

### Example Release Connectors

Figure 3A illustrates an example excenter release connector according to an example embodiment. A release connector 306 may be an excenter connector and include an operating head, for example a planer surface with an operating slot 312. The operating slot 312 may be configured to receive a tool, such as a screwdriver head, a coin, a knife blade, or the like, to turn the release connector 306. The release connector 306 may include an excenter surface 310 configured to engage a connector pin, as described below in reference to Figure 3B.

Figure 3B illustrates an example cross-sectional view of a release connector operation according to an example embodiment. The release connector 306 may be an excenter connector operably coupled to the pump housing 302. The pump base 304 may be aligned with the pump housing 302, such that the connector pin 320 penetrates the release connector 306 in the pump housing 302. The release connector 306 may be rotated, such as by a screwdriver inserted into the elongated operation slot 312. The rotation, e.g. clockwise or counter clockwise, of the release connector 306 may cause the excenter surface 310 to engage the connector pin 320 pin head. The connector pin 320 pin head may be pulled toward the center of the release connector 306. The excenter surface 310 may include a relatively flat portion at which the pin head may rest when the release connector 306 is fully engaged, e.g. in a fastened position. In an example embodiment, the release connector 306 may be rotated 180 degrees from the release position, in which the connector pin 320 may be removed or inserted, to the fastened position, in which the connector pin is engaged by the release connector 306.

The pump base 304 may be released, as depicted in Figure 3B from left to right. In the left depiction the release connector 306 is in the fastened position, e.g. in full engagement of the connector pin 320, specifically the excenter surface 310 is between the pump housing 302 and the connector pin head, preventing the pump base 304 from being removed from the pump housing.

The center depiction illustrates the release connector 306 in the process of being turned from the fastened position to the release position.

The right depiction shows the release connector 306 in the release position. The connector pin 320 penetrates the release connector 306, but is not engaged by the excenter surface 310. The connector pin 320 is free to be removed or inserted into the release connector 306 and the pump housing 302. In the release position the pump base 304 may be removed from the pump housing 302 allowing access to the impeller cavity for cleaning and repair as discussed above in Figure 2.

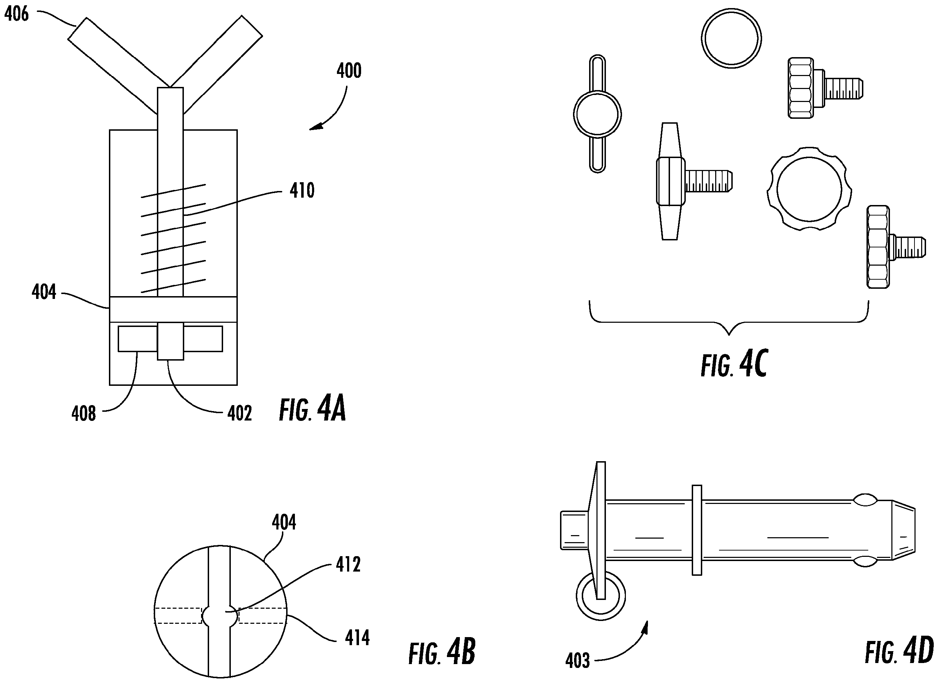

Figure 4A illustrates an example quarter turn release connector 400 according to an example embodiment. In an example embodiment, the quarter turn release connector 400 may be a quarter turn release connector. The quarter turn release connector 400 may include a shaft 402 and capture rods 408, e.g. at least one projection extending from the shaft. The quarter turn release connector 400 may be inserted into the pump housing 102, and penetrate into the pump base 104. The pump base 304 may include a capture 404 configured to receive and retain the quarter turn release connector. In some embodiments the configuration may be reversed, e.g. the quarter turn release connector may be configured to be inserted into the pump base 104 and penetrate into the pump housing 102.

The quarter turn release connector 400 may include an operating head 406. The operating head 406 may be tool operated, such as including a receiver for a tool head, e.g. screwdriver, coin, or Allen wrench; or may be hand operated, such as a butterfly knob.

The quarter turn release connector 400 may be configured such that the length of the shaft provides tension sufficient to maintain engagement of the capture rods with the capture 404. In some example embodiments, a tension spring 410 may be provided to provide tension to maintain engagement of the capture rods 408 with the capture 404.

Figure 4B illustrates an example quarter turn release connector capture according to an embodiment. The capture 404 may include a capture aperture 412 configured to receive the quarter turn release connector 400 in a specific alignment, e.g. allow penetration of the capture rods 408 in only the specified alignment. The capture aperture 412 may be configured to not allow insertion or removal of the quarter turn release connector 400 in other alignments. In an example embodiment, the release position may be about 30, 45, 60, 90, 180, 270 degrees, or the like from a fastened position. In some example embodiments, the release position may be between about 90 and 180 degrees form the fastened position.

In some example embodiments, the capture 404 may also include one or more valleys or ridges 414 configured to provide resistance to the capture rods 408 turning when engaged in the capture 404.

Figure 4C illustrates example release connector operating heads according to embodiments of the present invention. The operating head 406 may include any type of operating knob, such as a wing knob, round knob, flowerette knob, or the like.

Figure 4D illustrates and example ball lock release connector 403 according to an embodiment of the present invention. In an example embodiment, the quarter turn release connector 400, discussed above in Figures 4A and 4B, may be replaced with a ball lock release connector 403, e.g. ball lock release pins, and the capture aperture 404 may be configured to accept the shaft of the bullock release connector 403 with the balls retracted. In an example embodiment, the release connector may be a clip and lip disposed in the pump housing 102 and the pump base 104. The quarter turn release connector 400 may include a push button or slide switch, which, when operated, pushes the clip off of the lip disengaging the quarter turn release connector 400.

The release connectors 306, 402, or 403 may be molded from plastic or turned out of metal. The release able connector 306, 402, or 403 may be integral in the pump base 104 or may be clipped in, turned in, slide in, or otherwise be operably coupled to the pump base 104 during production.

### Example Float Switch Assembly

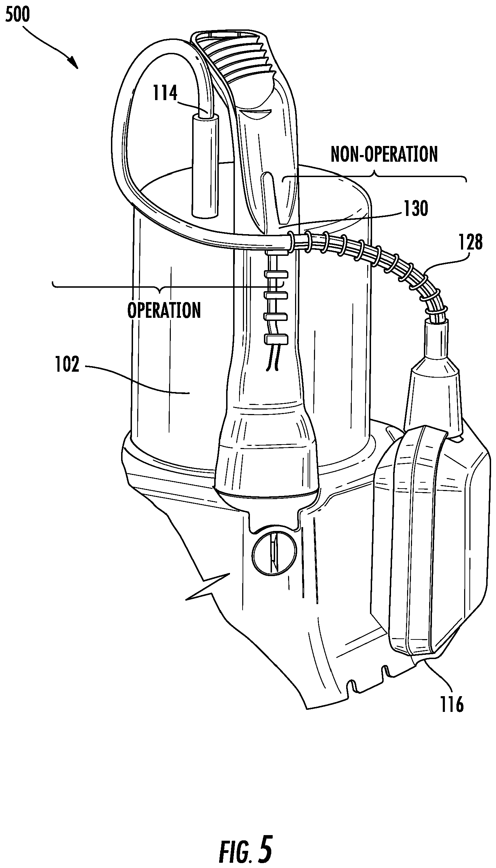

Figure 5 illustrates an example float switch assembly 500 according to an example embodiment. The float switch assembly 500 may include the float switch cable 114 and the float switch 116. The float switch cable 114 may have an operation region, e.g. a region at which the float switch cable 114 may be clipped or otherwise secured leaving sufficient cable length for the float switch 116 to operate; and a non-operation region, e.g. a region in which if clipped the float switch cable 114 will not have sufficient cable length to operate properly. In some example embodiments, the length of the non-operation region may be 8cm, 10cm, 12cm, or any other length which would provide for proper operation of the float switch 116.

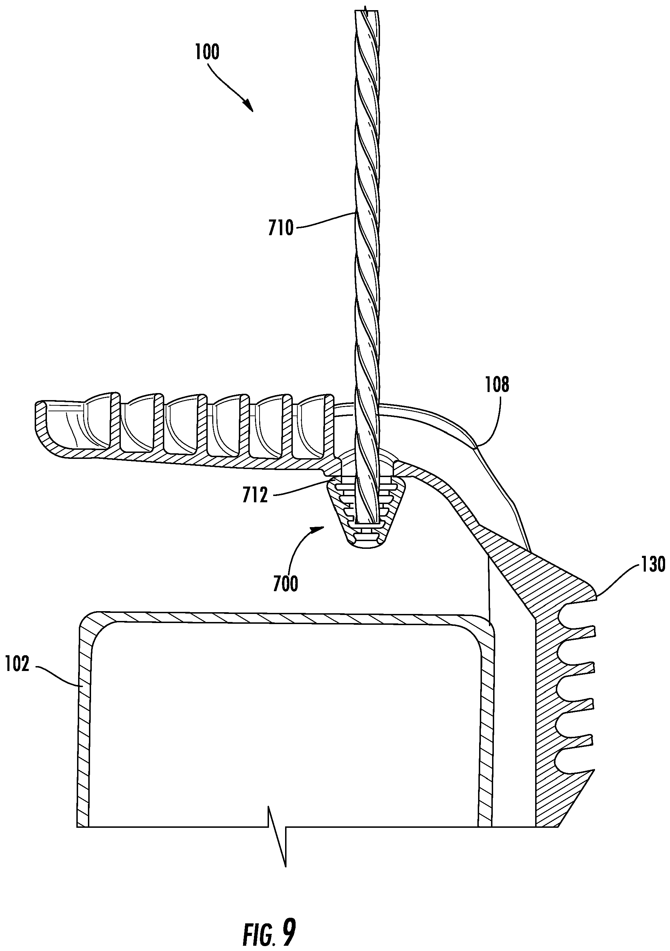

The float switch assembly 500 may include a float switch cable clip 130 disposed in a fixed position relative to the pump housing 102. In an example embodiment, the float switch cable clip 130 may be connected to or integral to the handle 108, as depicted in Figure 9. The float switch cable clip 130 may alternatively be mounted to any fixed position relative to the pump housing 102. The float switch cable clip 130 may have one or more clip positions, such as two or more recesses to receive the float switch cable 114 at different heights relative to the pump base 104. The clip positions of the float switch cable clip 130 may be associated with different switch on and switch off levels for the submersible pump 100 based on the movement of the float switch 116.

The float switch cable 114 may include a clip restrictor 128. The clip restrictor 128 may be affixed to the float switch cable 114, such as by an adhesive or shrink wrapping, e.g. heat shrinking, or be formed as part of the cable during molding, such as injection molding. The clip restrictor 128 may be configured to prevent the float switch cable 114 from being clipped in the non-operation region, to allow for proper operation of the float switch 116.

In an example embodiment, the clip restrictor 128 may be a plurality of ribs disposed transversely or longitudinally on the float switch cable 114, which may increase the diameter of the float switch cable 114 in the non-operation region relative to the operation region, e.g. the diameter of the clip restrictor 128 may be larger than the diameter of the float switch cable 114. In an instance in which the ribs are disposed transversely the ribs may be spaced at a distance less than the width of the float switch cable clip 130.

In some embodiments, the clip restrictor 128 may be one or more spiral ribs disposed in the non-operation region, which may increase the diameter of the float switch cable 114 in the non-operation region relative to the operation region.

In an example embodiment, the clip restrictor 128 may be a change in a diameter of the float switch cable 114, which prevents the float switch cable 114 from being clipped into the float switch cable clip 130. For example, the non-operation region may include float switch cabling 114 which is a larger, or smaller, in diameter than the operating region without utilization of ribs.

### Example Discharge Hose Connector Storage

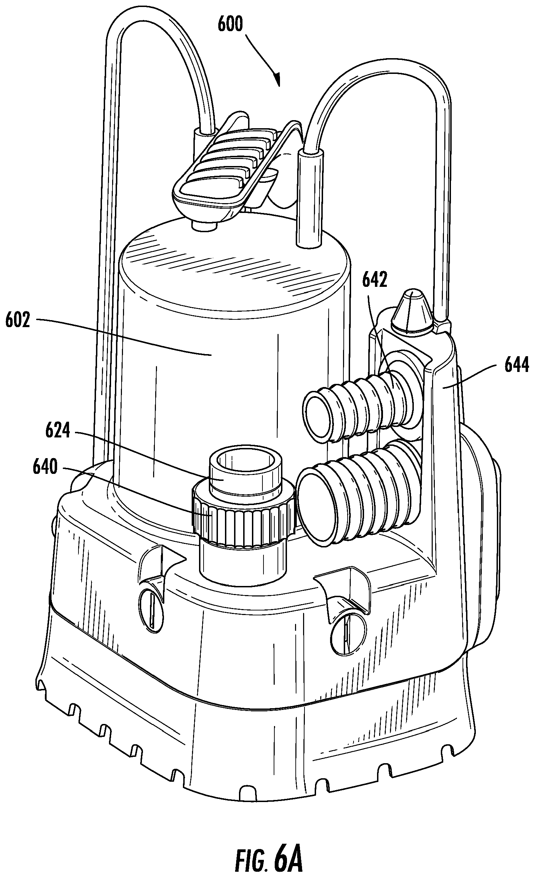

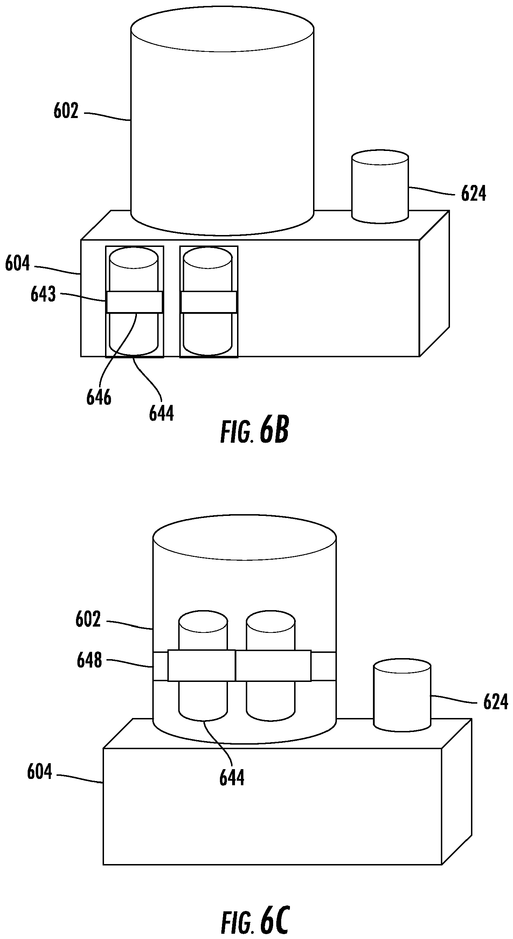

Figures 6A and 6C illustrate example submersible pumps 600 with a discharge hose connector storage according to an example embodiments of the present invention. In an example embodiment, the submersible pump 600 may include a pump discharge 624 configured to receive a discharge hose connector 642. The discharge hose connectors 642 may be configured to be used with discharge hoses of differing diameters, such as 1 inch, 1.5 inch, 2 inch, or the like, and/or differing configurations, such as threaded, ribbed, smooth, or the like.

The selected discharge hose connector 642 may be connected to the pump discharge 624 by a discharge hose connector fastener 640. The discharge hose connector fastener 640 may be a threaded nut, which may be configured to retain a flanged end of the discharge hose connector 642. In another embodiment, the discharge hose connector fastener 640 may be a slot configured to receive a tab on the end of the selected discharge hose connector 642, which may be rotated into a locked or fastened position. In some example embodiments, the discharge hose connector fastener 640 may be a thread on the pump discharge 624, configured to engage a complementary tread on the discharge hose connector 642.

The unselected discharge hose connectors 642 may be stored in a discharge hose connector storage 644. In the embodiment depicted in Figure 6A, the discharge hose connector storage 644 is a T slot, disposed on the pump housing 602, configured to retain a portion of the non-selected discharge hose connectors. Specifically, the discharge hose connectors 642 may include a flange portion which may be inserted into the T slot for storage. In some example embodiments, a plurality of T slots may be provided for storage of discharge hose connectors 642 at multiple locations on the submersible pump 600, such as for space or dimensional considerations. In some example embodiments, the discharge hose connector storage 644 may be removably attached to the submersible pump 600, such as snap fit or seated in a groove.

In the embodiment depicted in Figure 6B, the discharge hose connector storage may be one or more molded cavities 643 configured to receive a discharge hose connector 642. The discharge hose connectors 642 may be retained within the cavities by friction or tension provided by side walls of the molded cavity. In some embodiments, the molded cavities may include a cloth, elastic, or plastic retention strap 646 to retain the discharge hose connectors 642.

In the embodiment depicted in Figure 6C, the discharge hose connector storage may be a bandolier 648. The bandolier 648 may be a cloth, elastic, or plastic. The bandolier 648 may be molded or affixed, e.g. glued, riveted, or the like, to the pump housing 602 or pump base 604. The discharge hose connectors 644 may be retained within loops of the bandolier 648.

### Example Cable End Clip

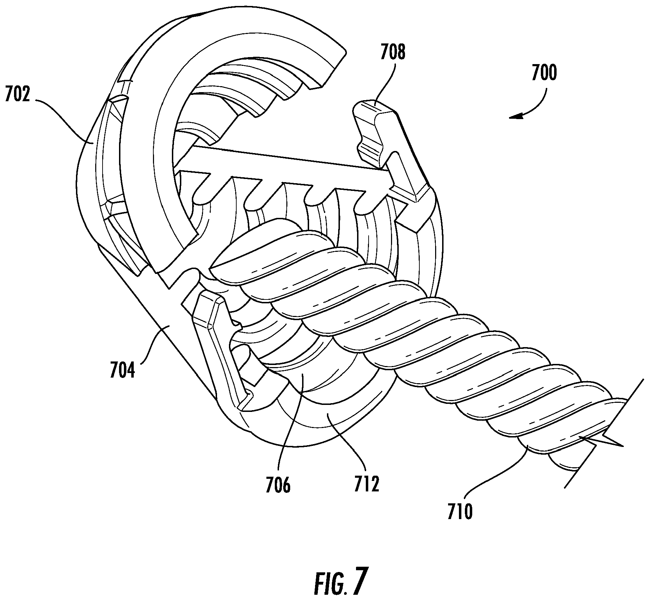

Figure 7 illustrates an example cable end clip in an open position according to an example embodiment of the present invention. The cable end clip 700 may comprise an upper housing 702 and a lower housing 704. The upper housing 702 and lower housing 704 may include one or more ribs 706 configured to compress and retain a cable 710, when the cable end clip 700 is in a shut position. The ribs 706 may be triangular, rounded, squared, or the like. The ribs 706 may have one or more internal diameters configured to compress and retain a cable 710, or ropes, of compatible diameters, such as about 3mm, about 5mm, about 8mm, about 12mm, or the like.

The upper housing 702 and lower housing 704 may include a stop seat, e.g. a flat surface around an aperture created when the upper housing and lower housing are in a shut position. The stop seat may be utilized to prevent the cable end clip from passing through an aperture of approximate the size of the cable 710 and may carry load placed on the cable end clip 700 by movement of the cable, such as raising or lowering a submersible pump 100.

The upper housing 702 and lower housing 704 may include a clip fastener 708 configured to retain the lower housing 702 and upper housing in a shut position. The clip fastener 708 may be a clip and lip configuration, such as one or more clips disposed on the lower housing 704 which engage corresponding lips on the upper housing 702, or a clip disposed on the upper housing 702 and a clip disposed on the lower housing 704 configured to engage corresponding lips on the lower housing 704 and upper housing 702, or the like.

In an example embodiment, the clip fastener 708 may be a rubber grommet, band, or the like, configured to be placed around the upper housing 702 and lower housing 704 to maintain the cable end clip 700 in the shut position. In some example embodiments, the clip fastener 708 may include a hose clamp, such as a screw tighten hose clamp, spring hose clamp, ratchet hose clamp, cable tie, or the like.

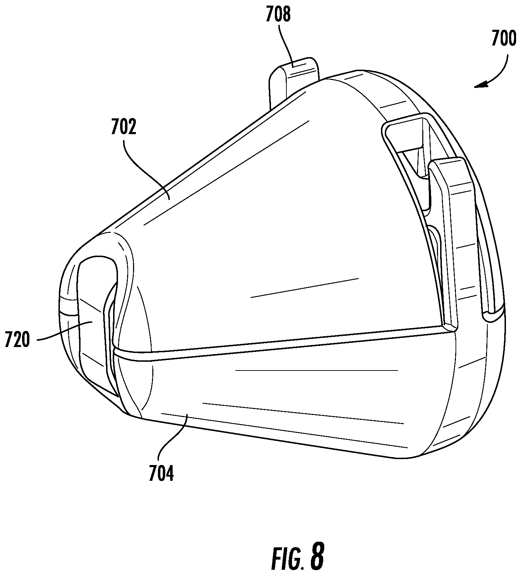

Figure 8 illustrates an example cable end clip in a closed position according to an example embodiment of the present invention. The cable end clip 700 may include a hinge 720 hingedly connecting the upper housing 702 to the lower housing 704. The cable end clip 700 may transition between the open and shut position in a clam shell like manner.

The hinge 720 may be disposed opposite the stop seat 712 and the clip fasteners 708.

The cable end clip 700 may have a substantially cylindrical, rectangular, or conical external surface, in the shut position.

In an example embodiment, the cable end clip 700 may be a single piece, e.g. the upper housing 702, the lower housing 704, the hinge 720, the clip fastener 708, and the ribs may be integrally formed. Alternatively, the portions of the cable end clip 700 may include separate and distinct pieces, such as the upper housing 702 and lower housing 704. In some example embodiments, the cable end clip 700 may be formed as a single piece or as separate pieces by injection molding.

Figure 9 illustrates an example cable end clip in use with a submersible pump according to an example embodiment of the present invention. The cable 710 may be affixed to a submersible pump 100 by passing the cable 710 through a mount or aperture, such as an aperture in the handle 108. The cable end clip 700 may be affixed to the cable 710 as discussed above in Figures 7 and 8. The stop seat 712 of the cable end clip may seat around the aperture when an upward force is applied to the cable 710. The stop seat 712 may prevent the cable end clip 700 from passing through the aperture, and apply upward force to the submersible pump, for example raising the submersible pump out of the fluid.

Figure 9 further depicts the float switch cable clip 130 integrally mounted to the handle 108.

According to the invention, the float switch cable includes an operation region in which the float switch cable is enabled to be clipped or secured leaving sufficient length of the float switch cable for the float switch to operate. The non-operation region includes a region of the float cable in which the float switch cable does not have sufficient length for the float switch to be operated if clipped or secured. In some example embodiments, the clip restrictor includes a plurality of ribs. In an example embodiment, the clip restrictor includes one or more spiral ribs. In some example embodiments, the clip restrictor includes a change in diameter of the float switch cable which prevents the float switch cable from being clipped into the float switch cable clip. In an example embodiment, the operation region of the float switch cable is a first diameter and the clip restrictor is a second diameter. In some example embodiments, the second diameter is larger than the first diameter. In an example embodiment, the clip restrictor is formed during molding of the float switch cable. In some example embodiments, the clip restrictor is affixed to the float switch cable by an adhesive. In an example embodiment, the clip restrictor is affixed to the float switch cable by shrink wrapping. In some example embodiments, the float switch cable clip includes a plurality of clip positions. In an example embodiment, each of the plurality of clip positions is associated with respective different switch on and switch off levels. In some example embodiments, the submersible pump of also includes a handle and the float switch cable clip is disposed on the handle.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A submersible pump (100) comprising:
a pump housing (102, 302);
a motor (120) disposed within the pump housing (102, 302), the motor (120) configured to power an impeller (122);
a float switch (116) configured to control supply of power to the motor (120);
a float switch cable clip (130) disposed at a fixed position relative to the pump housing (102, 302);
a float switch cable (114);
**characterized in that:**
the float switch cable (114) comprises at least an operation region and a non-operation region; and
a clip restrictor (128) disposed in the non-operation region, wherein the clip restrictor (128) prevents the float switch cable (114) from being clipped in the non-operation region by the float switch cable clip (130);
wherein the float switch cable (114) when clipped in the operation region by the float switch cable clip (130), leaves sufficient length of the float switch cable (114) for the float switch (116) to operate.

2. The submersible pump (100) of claim 1, wherein the clip restrictor (128) comprises a plurality of ribs.

3. The submersible pump (100) of any of claims 1-2, wherein the clip restrictor (128) comprises one or more spiral ribs.

4. The submersible pump (100) of any of claims 1-3, wherein the clip restrictor (128) comprises a change in diameter of the float switch cable (114) which prevents the float switch cable (114) from being clipped into the float switch cable clip (130).

5. The submersible pump (100) of any of claims 1-4, wherein the operation region of the float switch cable (114) is a first diameter and the clip restrictor is a second diameter.

6. The submersible pump (100) of claim 5, wherein the second diameter is larger than the first diameter.

7. The submersible pump (100) of any of claims 1-6, wherein the clip restrictor (128) is formed during molding of the float switch cable (114).

8. The submersible pump (100) of any of claims 1-7, wherein the clip restrictor (128) is affixed to the float switch cable (114) by an adhesive.

9. The submersible pump (100) of any of claims 1-7, wherein the clip restrictor (128) is affixed to the float switch cable (114) by shrink wrapping.

10. The submersible pump (100) of any of claims 1-9, wherein the float switch cable clip (116) comprises a plurality of clip positions.

11. The submersible pump (100) of claim 10, wherein each of the plurality of clip positions is associated with respective different switch on and switch off levels.

12. The submersible pump (100) of any of claim 1-11, further comprising:
a handle (108);
wherein the float switch cable clip (116) is disposed on the handle (108).

## Patentansprüche

1. Tauchpumpe (100), umfassend:
ein Pumpengehäuse (102, 302);
einen Motor (120), der innerhalb des Pumpengehäuses (102, 302) angeordnet ist, wobei der Motor (120) ausgelegt ist, um einen Impeller (122) anzutreiben;
einen Schwimmerschalter (116), der ausgelegt ist, um die Energiezufuhr zu dem Motor (120) zu steuern;
eine Schwimmerschalter-Kabelklemme (130), die bezogen auf das Pumpengehäuse (102, 302) an einer festen Position angeordnet ist;
ein Schwimmerschalterkabel (114);
**dadurch gekennzeichnet, dass:**
das Schwimmerschalterkabel (114) mindestens einen Betriebsbereich und einen Nicht-Betriebsbereich umfasst; und
eine Klemmbegrenzung (128) in dem Nicht-Betriebsbereich angeordnet ist, wobei die Klemmbegrenzung (128) verhindert, dass das Schwimmerschalterkabel (114) durch die Schwimmerschalter-Kabelklemme (130) in dem Nicht-Betriebsbereich geklemmt wird;
wobei das Schwimmerschalterkabel (114), wenn es im Betriebsbereich durch die Schwimmerschalter-Kabelklemme (130) geklemmt wird, eine ausreichende Länge des Schwimmerschalterkabels (114) für den Betrieb des Schwimmerschalters (116) lässt.

2. Tauchpumpe (100) nach Anspruch 1, wobei die Klemmbegrenzung (128) eine Vielzahl von Rippen umfasst.

3. Tauchpumpe (100) nach einem der Ansprüche 1-2, wobei die Klemmbegrenzung (128) eine oder mehrere Spiralrippen umfasst.

4. Tauchpumpe (100) nach einem der Ansprüche 1-3, wobei die Klemmbegrenzung (128) eine Durchmesseränderung des Schwimmerschalterkabels (114) umfasst, die verhindert, dass das Schwimmerschalterkabel (114) in die Schwimmerschalter-Kabelklemme (130) eingeklemmt wird.

5. Tauchpumpe (100) nach einem der Ansprüche 1-4, wobei der Betriebsbereich des Schwimmerschalterkabels (114) ein erster Durchmesser und die Klemmbegrenzung ein zweiter Durchmesser ist.

6. Tauchpumpe (100) nach Anspruch 5, wobei der zweite Durchmesser größer ist als der erste Durchmesser.

7. Tauchpumpe (100) nach einem der Ansprüche 1-6, wobei die Klemmbegrenzung (128) während des Formens des Schwimmerschalterkabels (114) gebildet wird.

8. Tauchpumpe (100) nach einem der Ansprüche 1-7, wobei die Klemmbegrenzung (128) mit einem Haftmittel an dem Schwimmerschalterkabel (114) befestigt ist.

9. Tauchpumpe (100) nach einem der Ansprüche 1-7, wobei die Klemmbegrenzung (128) durch Aufschrumpfen an dem Schwimmerschalterkabel (114) befestigt ist.

10. Tauchpumpe (100) nach einem der Ansprüche 1-9, wobei die Schwimmerschalter-Kabelklemme (116) eine Vielzahl von Klemmpositionen umfasst.

11. Tauchpumpe (100) nach Anspruch 10, wobei jeder der Vielzahl von Klemmpositionen jeweils unterschiedlichen Ein- und Ausschaltniveaus zugeordnet sind.

12. Tauchpumpe (100) nach einem der Ansprüche 1-11, ferner umfassend:
einen Griff (108);
wobei die Schwimmerschalter-Kabelklemme (116) an dem Griff (108) angeordnet ist.

## Revendications

1. Pompe submersible (100) comprenant :
un corps de pompe (102, 302) ;
un moteur (120) disposé dans le corps de pompe (102, 302), le moteur (120) étant conçu pour entraîner un impulseur (122) ;
un interrupteur à flotteur (116) conçu pour commander l'alimentation en puissance du moteur (120) ;
un attache-câble (130) d'interrupteur à flotteur disposé en une position fixe par rapport au corps de pompe (102, 302) ;
un câble (114) d'interrupteur à moteur ;
**caractérisée en ce que** :
le câble (114) d'interrupteur à flotteur comprend au moins une région de fonctionnement et une région de non-fonctionnement ; et
un restricteur d'attache (128) disposé dans la région de non-fonctionnement, dans laquelle le restricteur d'attache (128) empêche le câble (114) d'interrupteur à flotteur d'être attaché dans la région de non-fonctionnement par l'attache-câble (130) d'interrupteur à flotteur ;
dans laquelle le câble (114) d'interrupteur à flotteur, lorsqu'il est attaché dans la région de fonctionnement par l'attache-câble (130) d'interrupteur à flotteur, laisse une longueur suffisante du câble (114) d'interrupteur à flotteur pour que l'interrupteur à flotteur (116) fonctionne.

2. Pompe submersible (100) selon la revendication 1, dans laquelle le restricteur d'attache (128) comprend une pluralité de nervures.

3. Pompe submersible (100) selon l'une quelconque des revendications 1 et 2, dans laquelle le restricteur d'attache (128) comprend une ou plusieurs nervures en spirale.

4. Pompe submersible (100) selon l'une quelconque des revendications 1 à 3, dans laquelle le restricteur d'attache (128) comprend un changement de diamètre du câble (114) d'interrupteur à flotteur qui empêche le câble (114) d'interrupteur à flotteur d'être attaché à l'attache-câble (130) d'interrupteur à flotteur.

5. Pompe submersible (100) selon l'une quelconque des revendications 1 à 4, dans laquelle la région de fonctionnement du câble (114) d'interrupteur à flotteur présente un premier diamètre et le restricteur d'attache présente un second diamètre.

6. Pompe submersible (100) selon la revendication 5, dans laquelle le second diamètre est supérieur au premier diamètre.

7. Pompe submersible (100) selon l'une quelconque des revendications 1 à 6, dans laquelle le restricteur d'attache (128) est formé pendant le moulage du câble (114) d'interrupteur à flotteur.

8. Pompe submersible (100) selon l'une quelconque des revendications 1 à 7, dans laquelle le restricteur d'attache (128) est fixé au câble (114) d'interrupteur à flotteur au moyen d'un adhésif.

9. Pompe submersible (100) selon l'une quelconque des revendications 1 à 7, dans laquelle le restricteur d'attache (128) est fixé au câble (114) d'interrupteur à flotteur par emballage par rétraction.

10. Pompe submersible (100) selon l'une quelconque des revendications 1 à 9, dans laquelle l'attache-câble (116) d'interrupteur à flotteur comprend une pluralité de positions d'attache.

11. Pompe submersible (100) selon la revendication 10, dans laquelle chacune de la pluralité de positions d'attache est associée à des niveaux respectifs différents d'activation et de désactivation.

12. Pompe submersible (100) selon l'une quelconque des revendications 1 à 11, comprenant en outre :
une poignée (108) ;
dans laquelle l'attache-câble (116) d'interrupteur à flotteur est disposé sur la poignée (108).
